# EUROPEAN PATENT APPLICATION

(11) **EP 1 548 479 A1**
(43) Date of publication of application: **29.06.2005**
(21) Application number: 04106610.1
(22) Date of filing: 15.12.2004
(51) Int. Cl.: G02B 17/08, G02B 13/08, G02B 13/16, G02B 27/18, H04N 5/74

(54) **Projection Video or Television Apparatus**

(30) Priority: 23.12.2003 KR 2003095408
(71) Applicant: Samsung Electronics Co., Ltd., Suwon-city, Kyungki-do (KR)
(72) Inventor: Lee, Jong-soo, Chungcheongnam-do, (KR)
(74) Representative: Geary, Stuart Lloyd

(57) **Abstract**

Provided are a projection lens unit that enables a reduction in the thickness of a projection system and a projection system employing the same. The projection lens unit includes a refractive optical unit (20) including a plurality of lenses that enlarge and project an image produced by a display (15) and a reflective optical unit (30) including at least one reflecting mirror (32) slanted with respect to the minor axis (S) of the screen (SR), the reflective optical unit (30) reflecting the image passing through the refractive optical unit (20) toward the screen (SR). The projection lens unit does not interfere with a beam when the thickness of the projection system is decreased. Therefore, a projection system with a slim design as well as a large screen can be provided.

## Description

The present invention relates to a projection video or television apparatus.

As the demand for projection systems with large screens, high resolutions and slim designs has increased, research has been actively conducted to satisfy these requirements. To achieve a slim projection system, a projection lens unit must generate a thin frustum of light rays. However, when the projection lens unit is located at the centre of a screen, the frustum of a light rays can only be reduced to a limited degree. Thus, to achieve a thin frustum, the projection lens unit must hitherto be disposed obliquely at the lower portion of the screen.

Various other techniques are being developed for projection systems with large screens and slim designs. However, it is difficult to realize both a large screen and a slim design. Since the projection lens unit that projects an image onto the screen tends to become bulkier as the size of the screen increases, it is technically difficult to reduce the thickness of a projection display while increasing the size of a screen.

Referring to Figure 1, a known projection system, described in US-A-2002/071186, includes a light source, a refracting lens group GL, a first mirror M1, that reflects a beam exiting the refracting lens group GL, a second mirror M2 that reflects the beam reflected from the first mirror M1 upward, and a third mirror M3 that reflects the beam reflected from the second mirror M2 toward a screen 12. The projection lens system also includes a first image plane I1, a prism PR, and an aperture ST.

The refracting lens group GL extends parallel to the screen 12, and the first mirror M1 is at a 45 degree angle to the screen 12 such that a beam emerging from the refracting lens group GL is reflected 90 degrees toward the screen 12. Typically, a screen has an aspect ratio of 4:3 or 16:9 where the longer direction and the shorter direction are the major axis direction L and a minor axis direction S respectively.

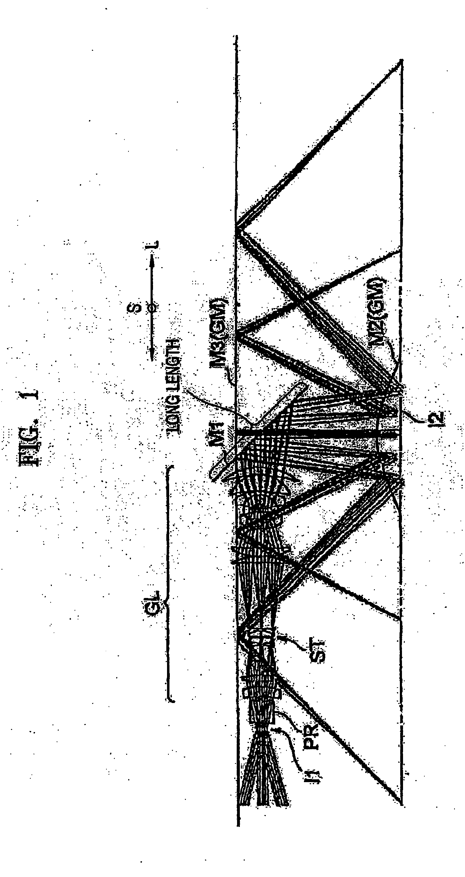

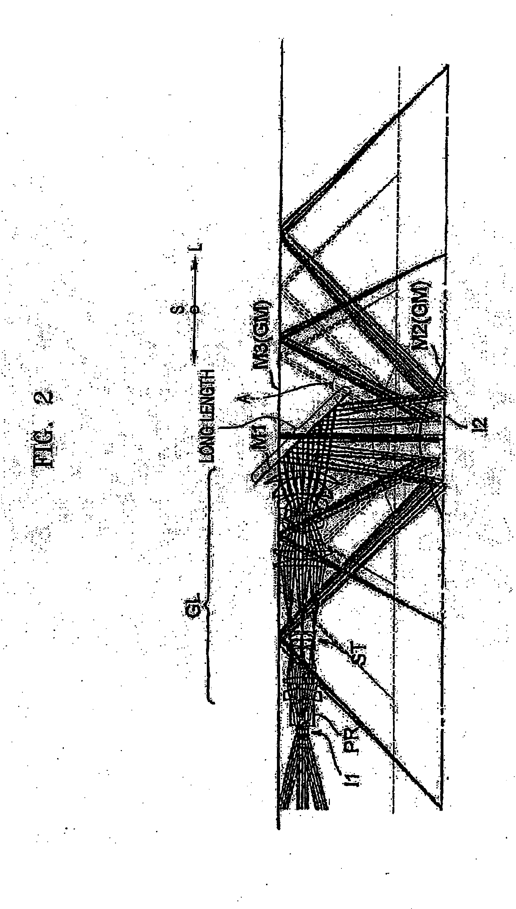

Figure 2 is a schematic drawing of a projection system in which the distance between the screen 12 and the third mirror M3 is less than that of the projection system shown in Figure 1.

Referring to Figure 2, since the first mirror M1 is inclined at 45 degrees to the major axis direction L, light reflected from the second mirror M2 may be intercepted by the first mirror M1, as indicated by a portion A. This is because the first mirror M1 has a major axis (longer axis) disposed in the path of light reflected from the second mirror M2 in the direction in which the first mirror M1 is slanted, that is, the major axis direction L of the first mirror M1.

That is, since the first mirror M1 is disposed such that its major axis is disposed in the light propagation path, the first mirror M1 intercepts most of the light reflected from the second mirror M2 than when the minor axis of the first mirror M1 disposed in the light propagation path. Thus, reducing the thickness of the projection system configured by moving the screen 12 closer to the third mirror M3 makes it more likely that the beam reflected from the second mirror M2 is intercepted by the first mirror M1. A projection system having an aspect ratio of 16:9 has a higher possibility that the beam reflected from the second mirror M2 is intercepted by the first mirror M1 than a projection system having an aspect ratio of 4:3 because the first mirror M1 also has an aspect ratio of 16:9 and the major axis of the first mirror M1 is disposed in a path of the light reflected from the second mirror M2.

As described above, in the projection system shown in Figure 2, the beam reflected from the second mirror M2 is obstructed by the first mirror M1. This problem becomes worse as the thickness of the projection system decreases. Thus, the reducing the thickness of the projection system is problematical.

According to the present invention, there is provided a projection lens unit for enlarging and projecting a beam onto a screen having a major axis and a minor axis, the projection lens unit comprising:
a refractive optical unit including a plurality of lenses that enlarge and project an image produced by a display; and
a reflective optical unit including at least one reflecting mirror slanted with respect to the minor axis of the screen, the reflective optical unit reflecting the image passing through the refractive optical unit toward the screen.

According to the present invention, there is provided a projection system in which an image produced by a display is enlarged and projected by a projection lens unit and focused onto a screen having a major axis and a minor axis, wherein the projection lens unit comprises:
a refractive optical unit including a plurality of lenses that enlarge and project the image; and
a reflective optical unit including at least one reflecting mirror slanted toward the minor axis of the screen, the reflective optical unit reflecting the image passing through the refractive optical unit toward the screen.

According to the present invention, there is provided a projection video or television apparatus which comprises or is positionable, i.e. an apparatus need not have its components configured as defined below in its normal operating position but can be repositioned, e.g. rotated, so that it meets the following definition:
a screen;
lens means for forming an image on the screen;
a first mirror for redirecting light from said lens means;
a second mirror for redirecting light, redirected by the first mirror; and
a third mirror for redirecting light, redirected by the first and second mirrors, onto the screen;
characterised in that the first mirror is tilted about a horizontal axis.

Additional preferred and optional features are defined in the dependent claims appended hereto.

Embodiments of the present invention will now be described, by way of example, with reference Figures 3 to 6 of the accompanying drawings:
Figure 1 is a schematic diagram of a projection system as disclosed in US-A-2002/0071186;
Figure 2 illustrates a beam being obstructed by a mirror when the thickness of the projection system of Figure 1 is reduced;
Figure 3 is a side view of a projection unit according to the present invention;
Figure 4 is a plan view of the projection unit illustrated in Figure 3;
Figure 5 is a schematic diagram of a projection unit, including the refractive and reflective optical systems, arranged in a different manner than those in Figure 3; and
Figure 6 is a schematic diagram of a projection system including the projection unit of Figure 3.

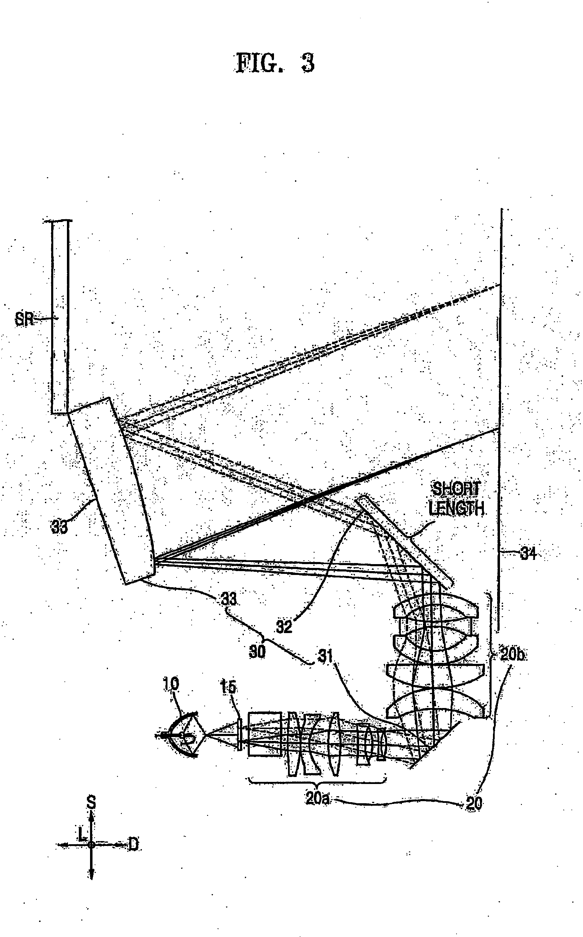

Referring to Figure 3, a projection lens unit includes a refractive optical unit 20, including a plurality of lenses that enlarge an image produced by a display 15 for projection, and a reflective optical unit 30, including one or more mirrors that reflect the image at an appropriate angle toward a screen SR.

The display 15 modulates a beam emitted from a light source 10 according to image information to produces an optical image. The refractive optical unit 20 may include a plurality of lenses or lens groups arranged in dependence on the available space. For example, the refractive optical unit 20 may comprise a first lens group 20a and a second lens group 20b. In this case, the first lens group 20a is arranged in the thickness direction D of the projection system including the projection lens unit and the second lens group 20b is arranged in the minor axis direction S of the screen SR.

The reflective optical unit 30 may include one or more mirrors and Figure 3 shows an example in which the reflective optical unit 30 includes first, second and third mirrors 31, 32, 33. The first mirror 31 is disposed in the optical path between the first lens group 20a and the second lens group 20b and changes the path of light emitted from the first lens group 20a toward the second lens group 20b. If the first reflecting mirror 31 is properly installed according to the entire lengths of the first and second lens groups 20a and 20b, the length of the refractive optical unit 20 in the thickness direction D of the projection system can be adjusted.

The light reflected from the first reflecting mirror 31 passes through the second lens group 20b and is reflected by the second mirror 32 toward the third mirror 33. The second mirror 32 has its shorter side axis tilted relative to the minor axis direction S. The third mirror 33 is an aspheric mirror that corrects image distortion. The light reflected from the third mirror 33 is reflected by a fourth mirror 34 and is focused onto the screen SR.

In the present embodiment, the refractive optical unit 20 includes the first and second lens groups 20a, 20b and the first reflecting mirror 31 is disposed in the optical path between the first and second lens groups 20a, 20b. However, the projection lens unit need not include the first mirror 31 when the refractive optical unit 20 is arranged obliquely with respect to the thickness direction D such that the light passing through the refractive optical unit 20 is directly incident onto the second mirror 32.

That is, the first mirror 31 is required only when the propagation path of the light must be changed according to the arrangement of the refractive optical unit 20. If the first and second lens groups 20a, 20b are disposed as in Figure 3, the first and second mirrors 31, 32 form identical angles with the fourth reflecting mirror 34, symmetrically about the second lens group 20b.

The optical axes of the refractive optical unit 20 and the reflective optical unit 30 are coplanar.

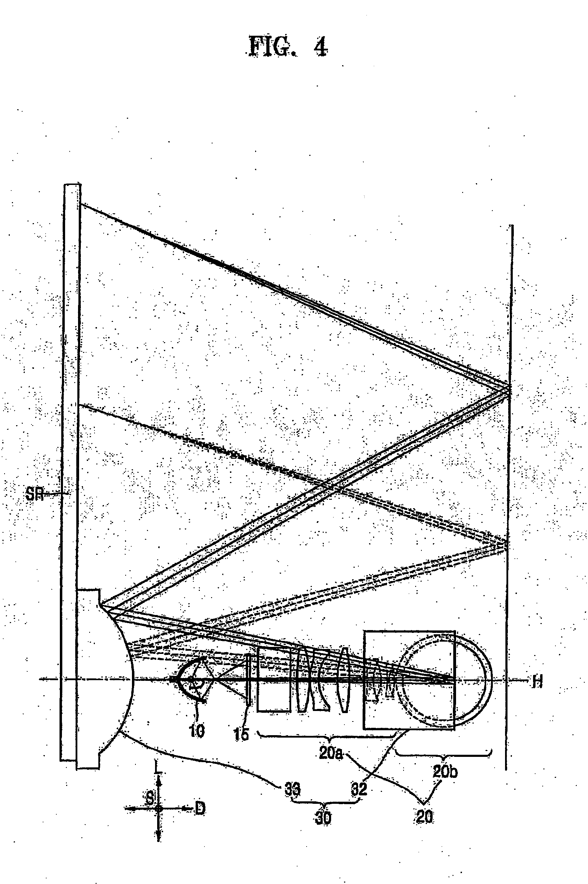

Referring to Figure 4, which is a plan view of half of the projection lens unit of Figure 3, the optical axes of the refractive optical unit 20 and the reflective optical unit 30 are in the same plane H, parallel to the minor axis of the screen SR. Since the projection lens unit is symmetrical with respect to the plane H.
Furthermore, the optical axes of the light source 10 and the display 15 may be disposed in the plane H, thereby making optical alignment of the projection unit easier.

While the refractive optical unit 20 has rotational symmetry, the reflective optical unit 30 has planar symmetry. The projection unit is symmetrical about a plane perpendicular to the minor axis direction S.

The first and second reflecting mirrors 31, 32 can be slanted at an angle to the minor axis directions of the screen SR, thereby preventing the reflective optical unit 30 from intercepting or obstructing the propagation of light when the thickness of the projection system, including the projection unit, is decreased.

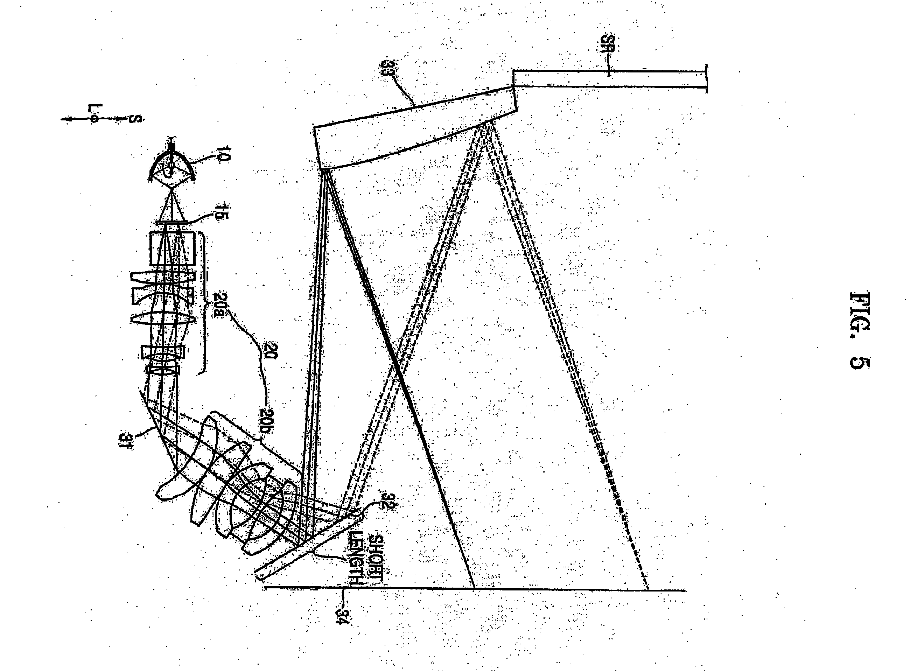

Referring to Figure 5, the thickness of the projection lens unit can be adjusted by adjusting the positions and angles of the first and second reflecting mirrors 31, 32. In this case, the first and second mirrors 31,32 are slanted opposite each other. Since adjusting the positions and angles of the first and second mirrors 31, 32 will not obstruct the propagation of a beam, there is no restrictions on reducing the thickness of the projection lens unit.
Referring to Figure 3, the effective area of the second mirror 32 has the same aspect ratio as the display 15 and the screen SR, and the short side of the effective area of the second mirror 32 is slanted with respect to the minor axis direction S of the screen SR. The effective area refers to an area on which an effective beam is incident. The second mirror 32 has an effective area with the same aspect ratio as that of the display 15 and the screen SR.

Since the short side of the second reflecting mirror 32 extends in the path of a beam propagating in the direction, in which the second reflecting mirror 32 is slanted, from among the beams reflected from the third mirror 33, there is little possibility that the second mirror 32 will obstruct the propagation of light reflected by the second mirror 32 and then reflected by the third mirror 33 into the fourth mirror 34. Thus, the projection unit can be used in a projection system with a slim design without suffering from any restrictions to its construction due to the second reflecting mirror 32, even if the distance between the fourth mirror 34 and the screen SR is short.

A projection system according to the present invention includes the projection unit, shown in Figure 3..

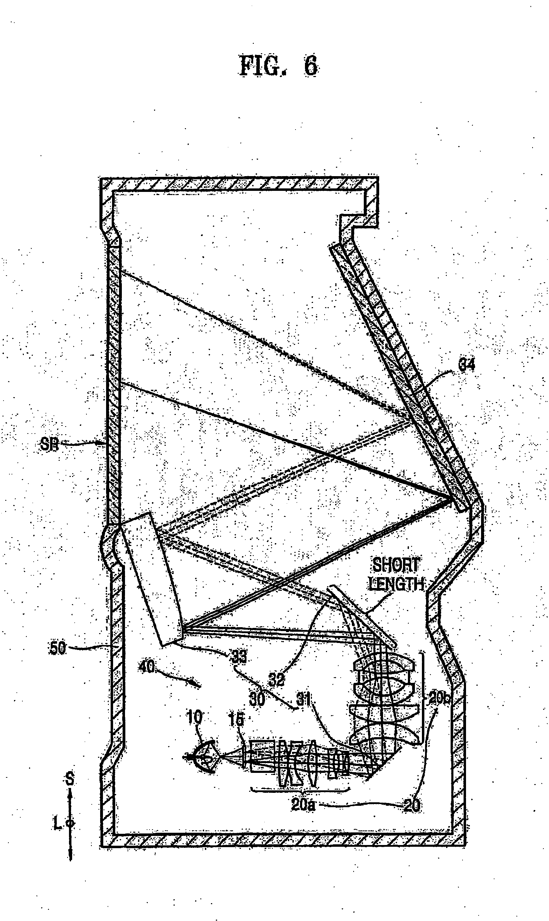

Referring to Figure 6, the projection system includes a light source 10, located in a lower portion of a cabinet 50, a display 15 that modulates light, emitted by the light source 10, according to image information to produce an optical image, a projection unit 40 that enlarges the image produced by the display 15 for projection and a screen SR onto which the image projected by the projection unit 40 is focused.

The projection unit 40 includes a refractive optical unit 20, including a plurality of lenses that enlarge the image produced by the display 15 for projection, and a reflective optical unit 30, including one or more mirrors that reflect the image at an appropriate angle toward a screen SR. The screen SR has a minor axis S and a major axis L and the refractive optical unit 30 has at least one reflecting mirror 32 tilted toward the minor axis S.

The optical axes of the refractive optical unit 20 and the reflective optical unit 30 can be coplanar. The projection lens unit 40 has a structure of the kind described with references to Figures 3 and 4, so a further detailed description thereof will not be given.

The projection system is constructed with a thickness that is related to the screen size. As described above, the projection unit has an improved arrangement of optical components that can allow the thickness of the projection system to be minimized. The projection unit is constructed such that a short side of a mirror in the reflective optical unit, that reflects an image produced by a display toward a screen, lies in a plane perpendicular to the major axis of the screen, thereby preventing interference between light and the reflective optical unit.

Thus, the projection system including the projection unit can have a large screen and a slim design. The projection unit is advantageous in a wide-screen projection system, e.g. one having an aspect ratio of 16:9. Furthermore, the optical axes of the refractive optical unit and the reflective optical unit in the projection unit are in the same plane, thereby making optical alignment and set up easier.

## Claims

1. A projection lens unit for enlarging and projecting a beam onto a screen having a major axis and a minor axis, the projection lens unit comprising:
a refractive optical unit including a plurality of lenses that enlarge and project an image produced by a display; and
a reflective optical unit including at least one reflecting mirror slanted with respect to the minor axis of the screen, the reflective optical unit reflecting the image passing through the refractive optical unit toward the screen.

2. The projection lens unit of claim 1, wherein optical axes of the refractive optical unit and the reflective optical unit are coplanar.

3. The projection lens unit of claim 2, wherein the optical axes of the refractive optical unit and the reflective optical unit are in a plane parallel to the minor axis of the screen.

4. The projection lens unit of any one of claims 1 to 3, wherein each of the at least one reflecting mirror has a short side slanted toward the minor axis of the screen.

5. The projection lens unit of any one of claims 1 to 3, wherein the refractive optical unit comprises first and second lens groups, and
wherein the reflective optical unit comprises: a first reflecting mirror that is disposed in an optical path between the first and second lens groups and changes the path of a beam passing through the first lens group; and a second reflecting mirror that is slanted with respect to the minor axis of the screen and reflects a beam passing through the second lens group.

6. The projection lens unit of claim 5, further comprising a third reflecting mirror that corrects distortion of the beam reflected from the second reflecting mirror.

7. The projection lens unit of claim 6, wherein the third reflecting mirror is an aspheric mirror.

8. A projection system in which an image produced by a display is enlarged and projected by a projection lens unit and focused onto a screen having a major axis and a minor axis, wherein the projection lens unit comprises:
a refractive optical unit including a plurality of lenses that enlarge and project the image; and
a reflective optical unit including at least one reflecting mirror slanted toward the minor axis of the screen, the reflective optical unit reflecting the image passing through the refractive optical unit toward the screen.

9. The projection system of claim 8, wherein optical axes of the refractive optical unit and the reflective optical unit are coplanar.

10. The projection system of claim 9, wherein the optical axes of the refractive optical unit and the reflective optical unit are in a plane parallel to the minor axis of the screen.

11. The projection system of any one of claims 8 to 10, wherein each of the at least one reflecting mirror has a short side slanted toward the minor axis of the screen.

12. Projection video or television apparatus which comprises or is positionable such that it comprises:
a screen (SR);
lens means for forming an image (20) on the screen (SR);
a first mirror (32) for redirecting light from said lens means (20);
a second mirror (33) for redirecting light, redirected by the first mirror (32); and
a third mirror (34) for redirecting light, redirected by the first and second mirrors (33, 33), onto the screen (34);
**characterised in that** the first mirror (32) is tilted about a horizontal axis.

13. An apparatus according to claim 12, wherein the second mirror (33) is configured for compensating for image distortion due to the geometry of the optical path.

14. An apparatus according to claim 12 or 13, wherein the light from the lens means (20) is incident on the first mirror (31) from below.

15. An apparatus according to claim 14, wherein the light from the lens means (20) is incident on the first mirror (31) from substantially directly below.

16. An apparatus according to any one of claim 12 to 15, wherein the lens means (20) comprises first and second lens groups (20a, 20b) and a further mirror (31) for directing light from the first group (20a) into the second group (20b).

17. An apparatus according to claim 16, wherein said further mirror (31) changes the direction of the light from said first group (20a) by substantially 90°.

18. An apparatus according to any one of claims 12 to 17, wherein the screen (SR), lens means (20) and the mirrors (31, 32, 33, 34) together have, in plan view, bilateral symmetry about an axis normal to the screen (SR).
